# EUROPEAN PATENT APPLICATION

(11) **EP 1 900 925 A2**
(43) Date of publication of application: **19.03.2008**
(21) Application number: 07075780.2
(22) Date of filing: 10.09.2007
(51) Int. Cl.: F02D 9/10, F16F 3/02

(54) **Impact damper mechanism**

(30) Priority: 18.09.2006 US 522870
(71) Applicant: Delphi Technologies, Inc., Troy, Michigan 48007 (US)
(72) Inventor: Gutierrez, Carlos A., Pittsford, NY 14534 (US); Garrick, Robert David, Rochester, NY 14624 (US)
(74) Representative: Denton, Michael John

(57) **Abstract**

A rotational speed damper (30) operable to dampen the speed of a gear (12) by gradually decreasing the rotational velocity and angular acceleration of the gear (12) over a time period beginning at the time the damper contacts the gear stop and ending at the time the gear reaches its first stopping point.

## Description

### TECHNICAL FIELD

The present invention relates to gear control in a mechanical or electromechanical assembly such as a controller or actuator, for example.

### BACKGROUND OF THE INVENTION

Many mechanical and electro-mechanical controllers and actuators include a gear or gear trains as part of their control mechanism design. Examples of such gear driven controllers and actuators include electronic throttle controls (ETCs) and actuators for controlling the opening and closing of a valve in a vehicle intake manifold. In their typical operating environment, these components are subject to frequent and abrupt stopping movements when reaching their stopping points which subject the gears and surrounding components to high stresses that can result in a breakdown of the gear teeth and failure of the part. While various attempts have been made to dampen the abrupt stopping movement of the gear, these attempts usually involve the addition of separately mounted components which undesirably add to the size and cost of the assembly.

It would therefore be desirable to reduce the operating stresses imparted on the gear or gear train of an assembly such as a controller or actuator, for example, which does not appreciably increase the size and cost of the assembly.

### SUMMARY OF THE INVENTION

The present invention provides a method and apparatus for reducing destructive forces on a gear caused by abrupt stopping of the gear by reducing or damping the rotational velocity and angular acceleration of a gear as the gear reaches its stopping point.

In one embodiment of the invention, a first gear is mounted in a gear housing and is connected to a shaft for controlling the movement of a component such as a throttle or valve blade, for example. The first gear may be mounted in meshing engagement with one or more additional gears as required by the particular controller or actuator design being employed. A rotational speed damper is mounted to one of the gear housing and the first gear, and a stop is mounted to the other of the housing or first gear. The stop and the damper are respectively positioned such that they come into contact with each other as the first gear approaches a first stopping point. The rotational speed damper is operable to dampen the speed of said first gear by gradually decreasing the rotational velocity and angular acceleration of the first gear over a time period beginning at the time the damper contacts the stop and ending at the time the first gear reaches its first stopping point.

The damper may comprise one or more resilient cantilevers and the cantilevers may be of the same or different lengths. The cantilevers may be spaced from each other and may further include a rib interconnecting the cantilevers. The cantilevers may furthermore be formed of a first material and a spacer element may be formed of a second material and positioned in the space between the cantilevers. The second material may be less stiff or more stiff than the first material. The cantilevers may shorten in length in a direction away or toward from the stop.

In yet another embodiment, the damper may be a leaf spring or spring clip having first and second ends with one of the ends anchored to the gear housing or gear, and the other end left unanchored and free such that the spring flexes upon a force being applied adjacent the free end thereof. A second stop may be positioned in spaced, adjacent relationship to the spring free end on the side of the spring opposite the first stop, the second stop defining the flexing limit of the spring upon impact with the first stop. The first stop may be positioned on the gear and said second stop may be positioned on the housing.

### BRIEF DESCRIPTION OF THE DRAWINGS

The present invention will now be described, by way of example, with reference to the accompanying drawings, in which:
FIG. 1 is a plan view of an apparatus employing a gear set;
FIG. 2 is a perspective view of an embodiment of the invention;
FIG. 3 is a perspective view of another embodiment of the invention;
FIG. 4 is a perspective view of another embodiment of the invention;
FIG. 5 is a perspective view of another embodiment of the invention; and
FIG. 6 is a perspective view of another embodiment of the invention.

### DESCRIPTION OF THE PREFERRED EMBODIMENTS

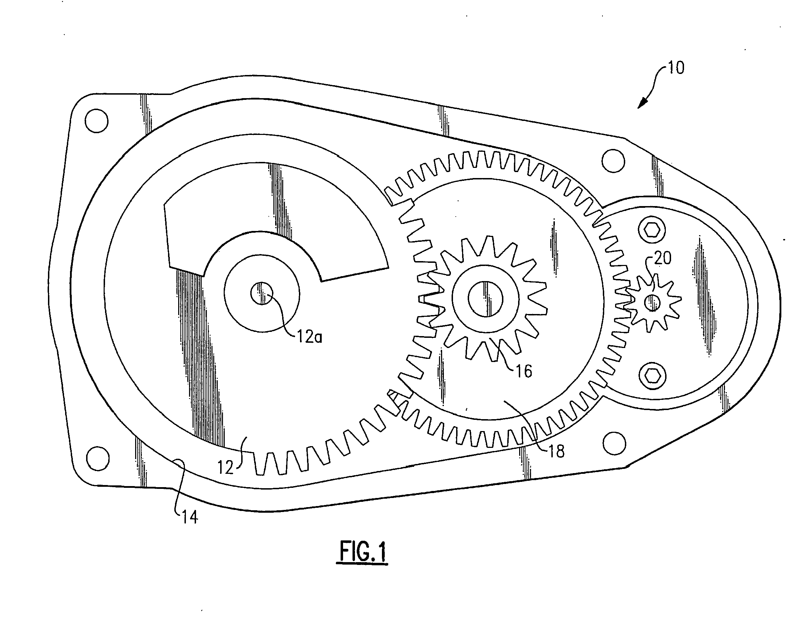

Referring now to the drawings, there is seen in FIG. 1 one embodiment of the invention incorporated into an electronic throttle control (ETC) 10. It is understood, however, that the invention is applicable to any type of apparatus having one or more gears where dampening of the gear stopping movement is desired.

In the ETC 10, a first gear 12 is mounted in a gear housing 14. The first gear may be mounted in meshing engagement with one or more additional gears as required by the particular controller design being employed. For example, in the embodiment of FIG. 1, first gear 12 may be placed in meshing engagement with a second gear 16 which is coaxially mounted to a third gear 18 mounted in meshing engagement with a fourth gear 20. A shaft (not shown) extends from the center 12a of the first gear 12 for attaching to and controlling the movement of a component (not shown) such as a throttle valve blade, for example.

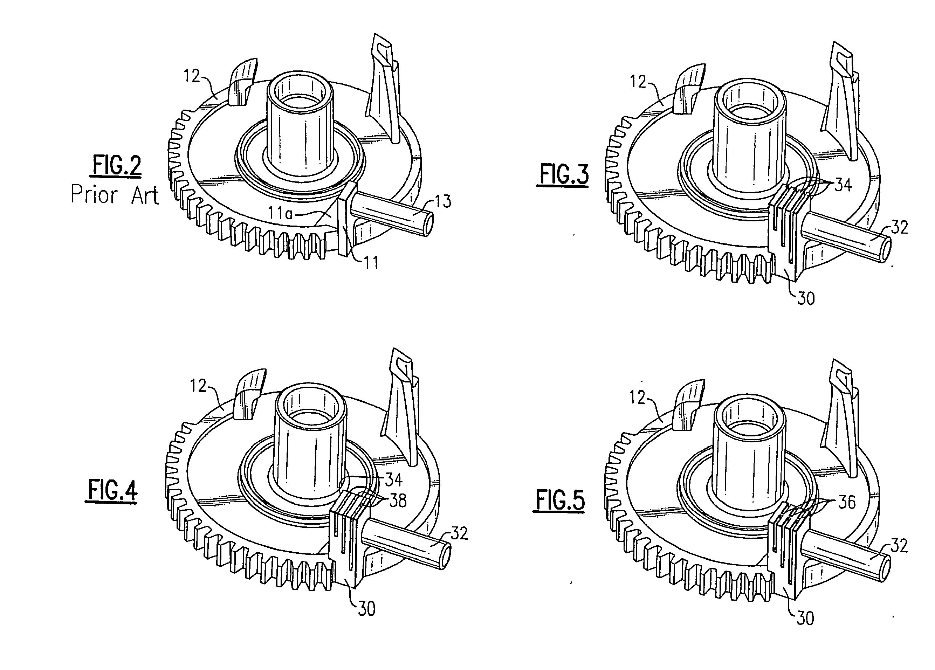

Referring to Fig. 2, a prior art gear stop 11 having a rigid back fin 11 a is mounted on gear 12. A stop 13 is mounted to the gear housing (not shown in Fig. 2) to stop the turning of gear 12 at the appropriate location. Since back fin 11a is rigid, it does not absorb an appreciable amount of the stopping force as gear stop 11 strikes cylindrical stop 13. This may result in the gear teeth absorbing the force resulting in damaged gear teeth.

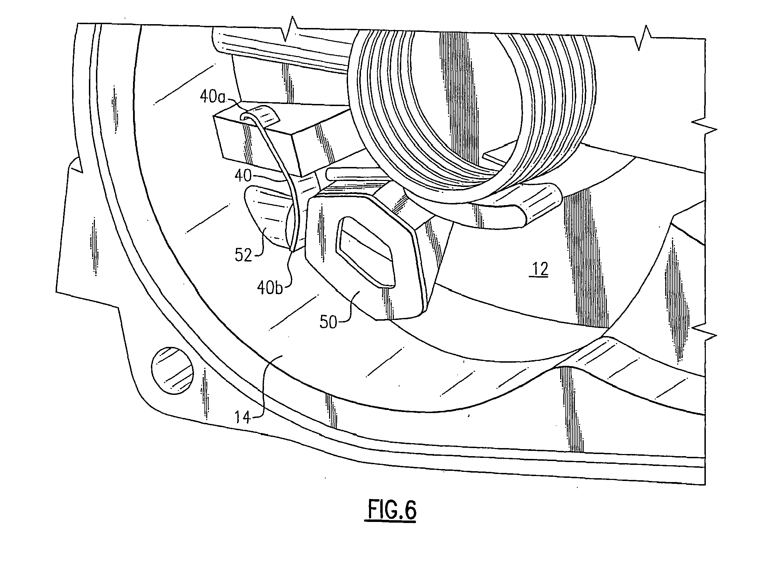

Referring to Figs. 3-5, a rotational speed damper 30 is mounted to the first gear 12, and a stop 32 is mounted to the gear housing 14 (gear housing 14 not shown in Figs. 3-5). In an alternate embodiment, the damper 30 may be mounted to the gear housing 14 and the stop 32 may be mounted to the gear 12. The stop 32 and the damper 30 are respectively positioned such that they come into contact with each other as the first gear 30 approaches a first stopping point. The rotational speed damper 30 is operable to dampen the speed of the first gear 12 by gradually decreasing the rotational velocity and angular acceleration of the first gear 12 over a time period beginning at the time the damper 30 contacts the stop 32 and ending at the time the first gear reaches its first stopping point. The damper 30 may comprise one or more resilient cantilevers 34 and the cantilevers may be of the same or different lengths as shown. The cantilevers 34 may contact or be spaced from each other as shown. In yet a further embodiment, a connecting rib 36 may interconnect the spaced cantilevers 34 as seen in Fig. 5. The cantilevers 34 may formed of a first resilient material such as plastic, for example. A spacer element 38 may be provided and formed of a second material and positioned in the space between the cantilevers 34 as shown in the embodiment of Fig. 4. The second material may be less stiff or more stiff than the first material to obtain the desired dampening effect. The cantilevers 34 may shorten in length in a direction away or toward the stop 32. In the embodiments of Figs. 3-5, cantilevers 34 shorten in a direction away from stop 32.

In yet another embodiment seen in FIG. 6, the damper 40 may be a leaf spring or clip including first and second ends 40a and 40b, respectively, with one of the ends 40a anchored to the housing or gear, and the other end 40b left unanchored and free such that the spring 40 flexes to absorb a force being applied adjacent the free end 40b thereof by first stop 50. A second stop 52 may be positioned in spaced, adjacent relationship to the spring free (second) end 40b on the side of the spring 40 opposite the first stop 50, the second stop 52 defining the flexing limit of the spring 40 upon the first stop 50 pressing spring free end 40b against second stop 52. The first stop 50 may be positioned on the gear 12 and said second stop 52 may be positioned on the housing 14.

While the invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. Apparatus for controlling the movement of a component, said apparatus comprising:
a) a gear housing;
b) a first rotatable gear mounted in said gear housing, said first gear adapted to be connected to and control the movement of said component;
c) a rotational speed damper mounted to one of said housing and said first gear; and
d) a stop mounted to the other of said one of said housing and said first gear, said stop and said damper being respectively positioned such that they come into contact with each other as said first gear approaches a first stopping point,
whereby said rotational speed damper is operable to dampen the speed of said first gear by gradually decelerating the rotational speed of said first gear over a time period beginning at the time said damper contacts said stop and ending at the time said first gear reaches said first stopping point.

2. The apparatus of claim 1 wherein said damper comprises one or more resilient cantilevers.

3. The apparatus of claim 2 wherein said damper comprises at least two cantilevers of different lengths.

4. The apparatus of claim 2 wherein said cantilevers are spaced from each other and are formed of a first material.

5. The apparatus of claim 2 wherein said cantilevers are all of a different length.

6. The apparatus of claim 2 wherein the cantilevers shorten in length in a direction away from stop.

7. The apparatus of claim 4 and further comprising a spacer element formed of a second material and positioned in the space between said cantilevers.

8. The apparatus of claim 7 wherein said second material is less stiff than said first material.

9. The apparatus of claim 7 wherein said second material is stiffer than said first material.

10. The apparatus of claim 1 wherein said damper is a leaf spring.

11. The apparatus of claim 10 wherein said leaf spring includes first and second ends and is anchored at one of said first and second ends with the other of said first and second ends unanchored such that said spring flexes upon a force being applied adjacent said second end thereof.

12. The apparatus of claim 11 wherein said spring first end is anchored to said housing.

13. The apparatus of claim 12 wherein said stop is a first stop and further comprising a second stop positioned in spaced, adjacent relationship to said spring second end on the side of said spring opposite said first stop, said second stop defining the flexing limit of said spring upon said first stop pressing against said spring second end and said second stop.

14. The apparatus of claim 13 wherein said first stop is positioned on said gear and said second stop is positioned on said housing.

15. The apparatus of claim 14 wherein said spring first end is anchored to said housing.

16. The apparatus of claim 1 wherein said damper is located on said first gear and said stop is located on said housing.

17. The apparatus of claim 1 wherein said damper is located on said housing and said stop is located on said gear.

18. The apparatus of claim 1 wherein said first gear is part of a gear set.

19. The apparatus of claim 1 wherein said apparatus is for controlling the movement of a valve blade.

20. A method for controlling the movement of a component, said method comprising the step of:
a) providing a gear housing;
b) providing a first rotatable gear mounted in said gear housing, said first gear adapted to be connected to and control the movement of said component;
c) providing a rotational speed damper mounted to one of said housing and said first gear; and
d) providing a stop mounted to the other of said one of said housing and said first gear, said stop and said damper being respectively positioned such that they come into contact with each other as said first gear approaches a first stopping point,
whereby said rotational speed damper is operable to dampen the speed of said first gear by gradually decelerating the rotational speed of said first gear over a time period beginning at the time said damper contacts said stop and ending at the time said first gear reaches said first stopping point.
